# DEMANDE DE BREVET EUROPEEN

(11) **EP 2 378 340 A1**
(43) Date de publication de la demande: **19.10.2011**
(21) Numéro de dépôt: 11290177.2
(22) Date de dépôt: 07.04.2011
(51) Int. Cl.: G02B 17/08, F21S 8/08, F21V 7/00, F21V 13/04, F21V 5/04, H01L 33/58, F21Y 101/02

(54) **Composant et agencement optiques pour un dispositif d'éclairage, en particulier une lanterne de candélabre**

(30) Priorité: 15.04.2010 FR 1001602
(71) Demandeur: Société de Force et Lumière Electriques, 93200 Saint-Denis (FR)
(72) Inventeur: Grave, Jean-Michel, 59249 Fromelles (FR); Sevin, Gilles, 62217 Achicourt (FR)
(74) Mandataire: Plaçais, Jean Yves

(57) **Abrégé**

Un composant optique pour un dispositif d'éclairage comprend un collecteur de lumière (1) accolé à un guide de lumière (15). Le collecteur comprend une face d'entrée et une surface latérale conjointement agencées pour délivrer en une face de sortie un flux lumineux convergent dont la section circulaire présente une zone centrale de forte intensité et une zone périphérique de faible intensité. Le guide, de forme pyramidale, a une face de base accolée au collecteur. La hauteur issue de cette base est inclinée par rapport à un axe central du collecteur. Ceci définit une petite face latérale (23) agencée en une face de sortie avec une surface de réfraction parabolique et une grande face latérale (19) avec principalement une surface de réflexion (27) disposée de manière à orienter l'ensemble de la zone centrale du faisceau lumineux vers la surface de réfraction parabolique (31).

## Description

L'invention concerne, d'une manière générale, le domaine de l'éclairage dit "publique", c'est-à-dire des dispositifs utilisés pour l'éclairage de chaussées, de trottoirs et autres lieux de passage de public.

Ces dispositifs prennent le plus souvent la forme de lampadaires disposés sur les trottoirs ou en bordure de chaussées.

Les lanternes de lampadaires actuelles utilisent en général des lampes de forte puissante et de haut rendement d'éclairage (supérieur à 150 lumens/W), par exemple des lampes à vapeur de sodium.

Ces lampes permettent d'obtenir un éclairement et une luminance suffisamment élevés pour assurer à la fois la visibilité du piéton et celle de l'automobiliste, conformément aux normes en vigueur.

Ces lampes, cependant, ne permettent pas d'atteindre des niveaux corrects d'uniformité d'éclairement et de luminance, du moins sans l'utilisation d'un dispositif-réflecteur encombrant.

Ce défaut d'uniformité agit négativement sur le confort des usagers, en particulier des automobilistes, voire sur leur sécurité. Notamment, lorsque la chaussée devient réfléchissante, par exemple lorsqu'elle est mouillée, il se forme des taches lumineuses qui sont gênantes car elles induisent des variations d'éclairement de la chaussée. Il en résulte un risque pour la sécurité.

L'invention vient améliorer la situation.

Cette invention vise d'abord un composant optique pour un dispositif d'éclairage du type comprenant une partie formant collecteur de lumière accolée à une partie formant guide de lumière remarquable en ce que le collecteur présente une forme générale de révolution et comprend une face d'entrée, une face de sortie et une surface latérale, la face d'entrée et la surface latérale étant conjointement agencées pour délivrer en face de sortie un flux lumineux convergent dont la section circulaire présente une zone centrale de forte intensité par rapport à une zone périphérique de faible intensité, que le guide de lumière présente une forme généralement pyramidale dont une face de base est accolée à la face de sortie du collecteur et dont la hauteur issue de cette face de base se trouve inclinée par rapport à un axe central dudit collecteur, ce qui définit une grande face latérale et une petite face latérale, que ladite petite face latérale est agencée en une face de sortie qui comprend une surface de réfraction parabolique, que ladite grande face latérale comprend principalement une surface de réflexion disposée par rapport à la face de base et à la face de sortie de manière à orienter sensiblement l'ensemble de la zone centrale du faisceau lumineux issu du collecteur vers la surface de réfraction parabolique.

L'invention vise également un agencement optique pour un dispositif d'éclairage comprenant un jeu de composants optiques du type ci-dessus fixés sur une platine-support.

L'invention vise enfin un dispositif d'éclairage publique comprenant un jeu d'agencements optiques du type ci-dessus et au moins une source de lumière ponctuelle respective pour chaque composant optique de ces agencements.

Le composant et l'agencement selon l'invention peuvent être installés dans une lanterne de lampadaire. Ils permettent d'atteindre un bon niveau d'uniformité et d'éviter ainsi le phénomène des taches lumineuses exposé ci-dessous.

Un ou plusieurs composants selon l'invention peuvent être adjoints à une plaque de circuit imprimé électronique supportant des sources lumineuses ponctuelles, de type diode électroluminescente par exemple. L'ensemble est ensuite fixé sur un support adaptable sur différents types de mât ou d'attaches murales, et protégé par une vasque.

Plusieurs sources lumineuses ponctuelles sont nécessaires au fonctionnement d'un agencement selon l'invention. Les composants sont mutuellement positionnés pour produire un éclairement et/ou une luminance uniformes dans des zones visées de la chaussée et/ou du trottoir. Chaque agencement produit conjointement aux sources de lumière un éclairement d'uniformité adaptée. La multiplication de ces agencements sur une même plaque électronique et/ou dans une même lanterne de lampadaire permet d'atteindre les niveaux d'illumination requis, en particulier par les normes en vigueur. Il devient possible d'éclairer des zones différentes tout en gardant les composants fixés sur un même support plat, disposé horizontalement.

Chaque agencement d'une même lanterne fonctionne indépendamment des autres et opère ainsi comme une lampe élémentaire. On obtient ainsi la possibilité de composer un dispositif d'éclairage modulable, équipé selon les applications de l'une ou l'autre des réalisations d'optiques. Ces versions correspondent à des formats de route différents et ne nécessitent pas de repenser la totalité du système.

Le dispositif d'éclairage obtenu est également plus fiable, puisque la défaillance d'un agencement ne modifie pas la forme de la distribution photométrique. Il est modulable, car des agencements présentant des configurations différentes les uns des autres peuvent être associés sur un même support plat, disposé horizontalement, pour éclairer des zones différentes et/ou renforcer l'éclairage dans d'autres zones.

Autrement dit, il devient possible de combiner les agencements optiques selon l'invention sur un même support plan tout en ayant la possibilité d'adapter l'éclairage obtenu.

D'autres caractéristiques et avantages de l'invention apparaîtront à la lumière de la description détaillée ci-après, et des dessins annexés sur lesquels :
- la figure 1 représente un collecteur pour un composant optique selon l'invention, vu en coupe selon un plan contenant l'axe de révolution de ce collecteur ;
- la figure 2 représente un guide de lumière pour un composant optique selon premier mode de réalisation, vu de face ;
- la figure 3 représente le guide de la figure 2 vu de dessus ;
- la figure 4 représente un guide de lumière pour un composant optique selon un second mode de réalisation, vu de face ;
- la figure 5 représente le guide de la figure 4 vu de dessus ;
- la figure 6 représente un guide de lumière pour un composant optique selon un troisième de mode de réalisation, vu de face ;
- la figure 7 représente le guide de la figure 6 vu de dessus ;
- la figure 8 représente un guide de lumière pour un composant optique selon un quatrième mode de réalisation, vu de face ;
- la figure 9 représente le guide de la figure 8 vu de dessus ;
- la figure 10 représente un agencement optique pour un dispositif d'éclairage selon un premier mode de réalisation, vu de face ;
- la figure 11 représente l'agencement de la figure 10 vu de dessous ;
- la figure 12 représente un composant optique de la figure 10 vu en coupe selon une ligne XII/XII ;
- la figure 13 représente un agencement optique pour un dispositif d'éclairage selon un second mode de réalisation, vu de face ;
- la figure 14 représente l'agencement de la figure 13 vu de dessous ;
- la figure 15 représente un diagramme de luminance d'un dispositif d'éclairage selon l'invention, en rendu fausse couleur ;
- la figure 16 représente une courbe de photométrie du dispositif de la figure 15.

Les dessins annexés contiennent des éléments de caractère certain. Ils pourront donc non seulement servir à compléter l'invention, mais aussi contribuer à sa définition, le cas échéant.

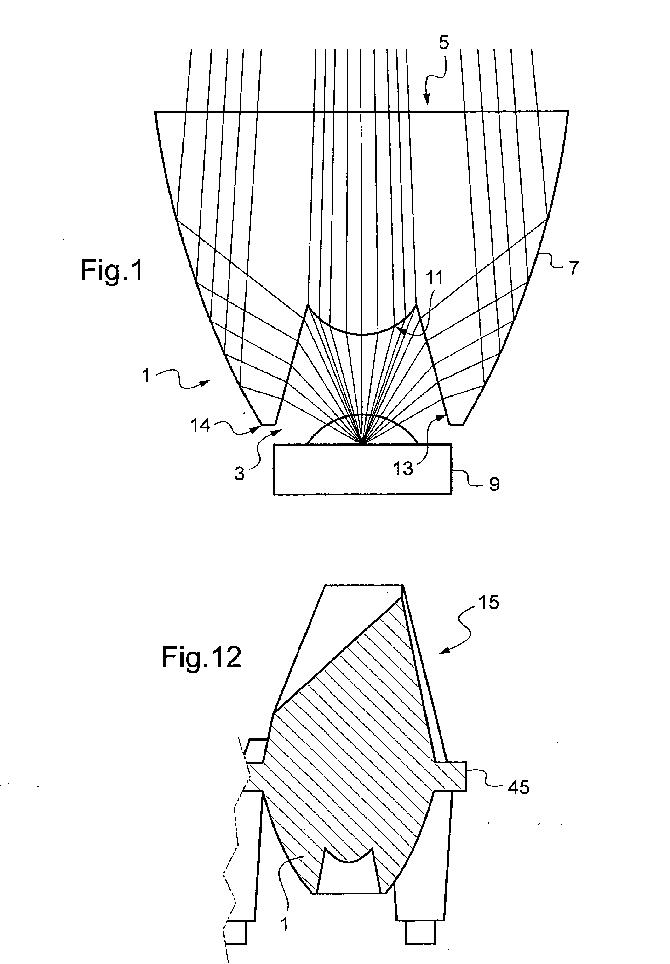

La figure 1 montre un collecteur de lumière 1 à usage pour la réalisation d'un composant optique pour un dispositif d'éclairage.

Le collecteur 1 se présente sous la forme d'une pièce de révolution délimitée suivant son axe de révolution par une première face d'extrémité, ou face d'entrée de lumière 3, et une seconde face d'extrémité, opposée à la première, ou face de sortie de lumière 5.

Le collecteur 1 présente une surface latérale 7 reliant la face d'entrée 3 à la face de sortie 5. Cette surface latérale 7 est réfléchissante.

Le collecteur 1 est réalisé ici sous la forme d'une pièce monobloc et pleine.

Le collecteur 1 est destiné à être disposé à proximité immédiate d'une source de lumière quasi ponctuelle, représentée sur la figure 1 par une diode électroluminescente, ou DEL 9, de manière que sa face d'entrée 3 se trouve en regard de cette DEL 9.

La face d'entrée 3 comprend une surface d'entrée centrale 11 disposée au droit de la DEL 9 et une surface d'entrée latérale 13 s'appuyant sur le bord de la surface centrale 11 et entourant au moins partiellement la DEL 9.

Les surfaces centrale 11 et latérale 13 présentent une symétrie de révolution, dont l'axe coïncide avec l'axe de révolution du collecteur 1.

La surface centrale 11 présente un bord généralement circulaire et se trouve conformée en un paraboloïde elliptique.

La surface latérale 13 est conformée en une surface cylindrique conique qui se resserre en direction de la face de sortie 5. Le bord de la surface latérale 13 éloigné de la DEL 9 se rattache à la surface centrale 11, tandis que le bord de cette surface latérale 13 proche de la DEL 9 se rattache à un bord radialement intérieur d'une surface plane annulaire 14 sensiblement perpendiculaire à l'axe de révolution du collecteur 1. Cette surface plane annulaire forme une surface d'extrémité pour le collecteur 1.

La face de sortie 5 est conformée en une surface plane et circulaire. La surface réfléchissante 7 relie un bord radialement extérieur de la surface annulaire 14 au bord de la face de sortie 5. La surface réfléchissante 7 est conformée en un paraboloïde circulaire.

La figure 1 montre également les différents chemins des rayons lumineux. Le flux lumineux émis par la source ponctuelle 9 présente une plus grande intensité en sa partie centrale. La surface centrale 11 agit en tant que lentille convergente et recentre le flux lumineux incident, lequel correspond à la partie centrale du flux lumineux émis par la DEL 9.

La partie du flux lumineux émis par la DEL 9 qui traverse la surface latérale 13 est légèrement déviée par réfraction. Elle est ensuite reflétée par la surface latérale 7. Le faisceau lumineux réfléchi par la surface latérale 7 se trouve recentré par rapport au flux lumineux incident et présente une allure convergente.

À la sortie du collecteur 1, on obtient un faisceau lumineux convergent dont la section circulaire comprend une partie centrale de forte intensité lumineuse et une couronne périphérique où l'intensité lumineuse se trouve en comparaison plus faible.

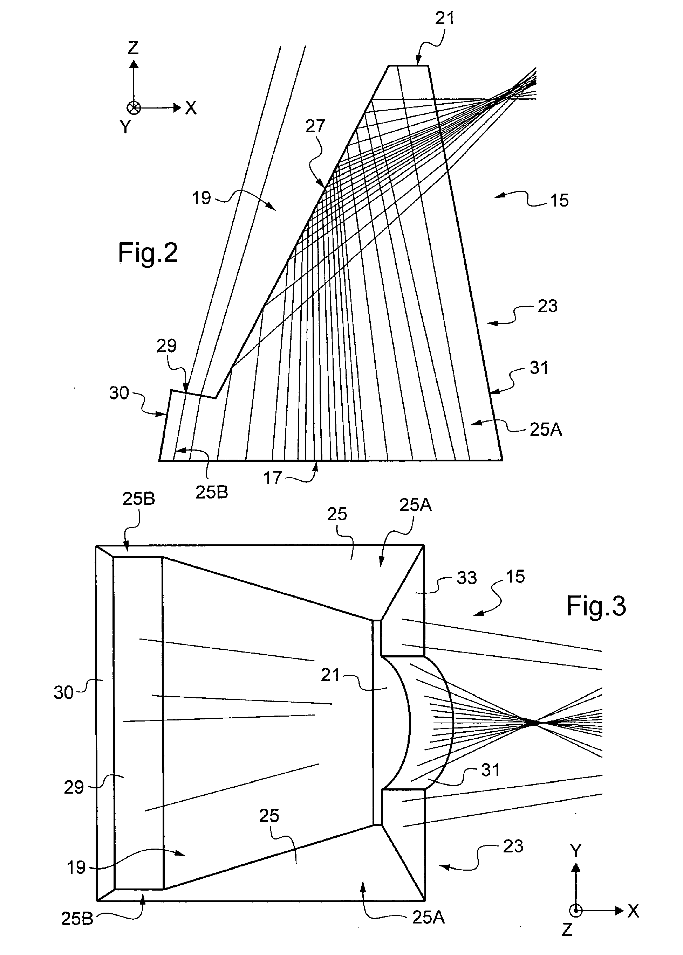

Les figures 2 et 3 montrent un guide de lumière à usage pour la réalisation d'un composant optique pour un dispositif d'éclairage selon un premier mode de réalisation, ou premier prisme 15.

Le premier prisme 15 présente une allure générale pyramidale dont la base forme une face d'entrée de lumière 17.

Cette face d'entrée 17 est ici conformée en une surface plane et rectangulaire.

On définit une base orthogonale X, Y, Z de la façon suivante:
- la direction X correspond à la direction d'extension du petit bord de la surface d'entrée 17 ;
- la direction Y correspond à la direction d'extension du grand bord de la surface d'entrée 17 ;
- la direction Z correspond à la direction normale en plan défini par les directions X et Y.

Opposée en hauteur à la face d'entrée 17 du premier prisme 15 se trouve une face supérieure 21 conformée en une surface plane, parallèle à la face d'entrée de lumière 17.

Le prisme 15 présente une grande face latérale 19 reliant un grand bord de la face d'entrée 17 à la face supérieure 21, et une petite face latérale 23 reliant cette face supérieure 21 au grand bord opposé de la face d'entrée 17.

Le prisme 15 présente en outre deux faces latérales symétriques 25 reliant respectivement un petit bord de la surface d'entrée 17 à la face supérieure 21. Ici, ces faces latérales 25 sont conformées en des surfaces planes et d'allure générale trapézoïdale.

La grande face 19 comprend une surface principale 27 de réflexion, généralement plane et en forme de trapèze isocèle, assez fortement inclinée par rapport à la face d'entrée 17. Dans le plan XZ, le bord formant petite base de surface principale 27 se raccorde à la face supérieure 21. Ce bord se trouve parallèle à la surface d'entrée 17. Les bords formant côtés de la surface principale 27 se raccordent respectivement à l'une des face latérales symétriques 25 du premier prisme 15.

La grande face 19 comprend en outre une surface secondaire 29 de réfraction généralement plane et rectangulaire. La surface secondaire 29 se raccorde à un bord formant grande base de la surface principale 27 en l'un de ses bords longitudinaux, tandis que l'autre bord longitudinal se raccorde à la face d'entrée 17 par l'intermédiaire d'une surface de jonction 30, plane, en forme de trapèze isocèle et légèrement inclinée par rapport au plan YZ, dans le plan ZX.

Les bords longitudinaux de la surface secondaire 29 sont disposés parallèlement aux bords de largeur de la face d'entrée 17 et présentent une longueur légèrement inférieure à ces derniers.

La surface secondaire 29 est légèrement inclinée par rapport au plan XY dans le plan XZ de telle manière que son bord longitudinal relié à la surface principale 27 se trouve plus proche de la face d'entrée 17 que son bord longitudinal opposé.

Les termes "principal" et "secondaire" utilisés pour qualifier les surface de réflexion 27 et de réfraction 29 concernent ici la quantité de flux lumineux que ces surfaces peuvent concerner.

Du fait de la présence, dans la grande face 19, d'une surface principale 27 et d'une surface secondaire 29, chaque face latérale 25 présente une forme complexe, correspondant à la réunion d'une portion principale 25A trapézoïdale dont la grande base est reliée à la face d'entrée 17, la petite base à la face supérieure 21, un côté à la face 23 et un côté partiellement à la surface principale 27, et d'une portion secondaire 25B également trapézoïdale dont la grande base est reliée à la surface secondaire 29, la petite base à la face d'entrée 17, un côté à la surface de jonction 30 et l'autre côté à un côté de la portion principale 25A.

La petite face 23 présente une allure générale trapézoïdale. Elle est généralement inclinée de façon assez importante par rapport au plan XY dans le plan XZ.

Cette petite face 23 présente une surface principale 31, de réfraction, s'étendant suivant la longueur de la petite face 23 en une zone médiane de cette dernière, et une surface secondaire 33 de réfraction s'étendant de part et d'autre de la surface principale 31.

La surface secondaire 33 se raccorde à chacune des faces latérales 25. Elle est généralement plane.

La surface principale 31 est conformée en une extension parabolique, ici de 6 millimètres de largeur, par rapport à la face de sortie secondaire 33. Le centre de courbure de la surface 31 est situé vers l'intérieur du premier prisme 15. Cette surface principale 31 fait saillie de la surface secondaire 33.

Le premier prisme 15 est destiné à être accolé à un collecteur de lumière du type du collecteur 1 de la figure 1, la face d'entrée 17 du prisme 15 contre la face de sortie 5 du collecteur 1 et de manière que le centre de la face d'entrée 17 coïncide avec celui de la face de sortie 5.

La surface secondaire 29 de la grande face 19 est disposée de manière qu'une faible partie du faisceau lumineux issu du collecteur 1 parvienne à cette surface secondaire 29. Les rayons lumineux rencontrant cette surface secondaire 29 sont réfractés et divergent légèrement en raison de l'indice de réfraction de l'air, qui est inférieur à celui du matériau du prisme 15, ici du polyméthacrylate de méthyle, ou PMMA, d'indice 1,49. Le flux lumineux quittant le premier prisme 15 par cette surface secondaire 29 présente une faible intensité. L'axe de ce faisceau forme un angle assez faible avec la direction Z.

L'inclinaison de la surface secondaire 29 de la grande face 19 par rapport au plan XY permet d'orienter le faisceau lumineux réfracté par cette surface.

Ici, cette surface est légèrement inclinée dans le plan XZ par rapport à la direction X. Elle pourrait en outre être légèrement inclinée dans le plan YZ par rapport à la direction Y.

Le reste du faisceau lumineux issu du collecteur 1, c'est-à-dire sa plus grande partie, incluant la zone centrale de forte intensité, est réfléchi par la surface secondaire 27 de la grande face 19. Cette surface principale 27 n'a pas d'influence sur la forme du faisceau lumineux. Elle dévie ce faisceau en direction d'une partie supérieure de la surface principale 31 de la petite face 23. Par conséquent, le faisceau lumineux rencontrant cette surface principale 31 est toujours convergent. La surface principale 31 reçoit la totalité du flux de la partie centrale du faisceau issu du collecteur 1, c'est-à-dire la totalité du flux lumineux qui a pénétré dans le collecteur 5 par la surface centrale 11.

La surface principale 31 de la petite face 23 reçoit également une partie du faisceau lumineux ayant pénétré dans le collecteur 1 par sa surface latérale 13. Le reste de ce faisceau rencontre la surface secondaire 33. La surface principale 31 agit à la manière d'une lentille convergente et recentre ainsi le faisceau lumineux incident. Les rayons sortant du premier prisme 15 par cette face principale 31 se croisent dans un plan focal image et divergent en aval de ce plan focal. Il en résulte une tache lumineuse de forte luminance, qui s'élargit et dont l'intensité diminue à mesure que l'on s'éloigne du premier prisme 15.

Le faisceau lumineux traversant la surface secondaire 33 de la petite face 23 est réfracté et converge un peu davantage.

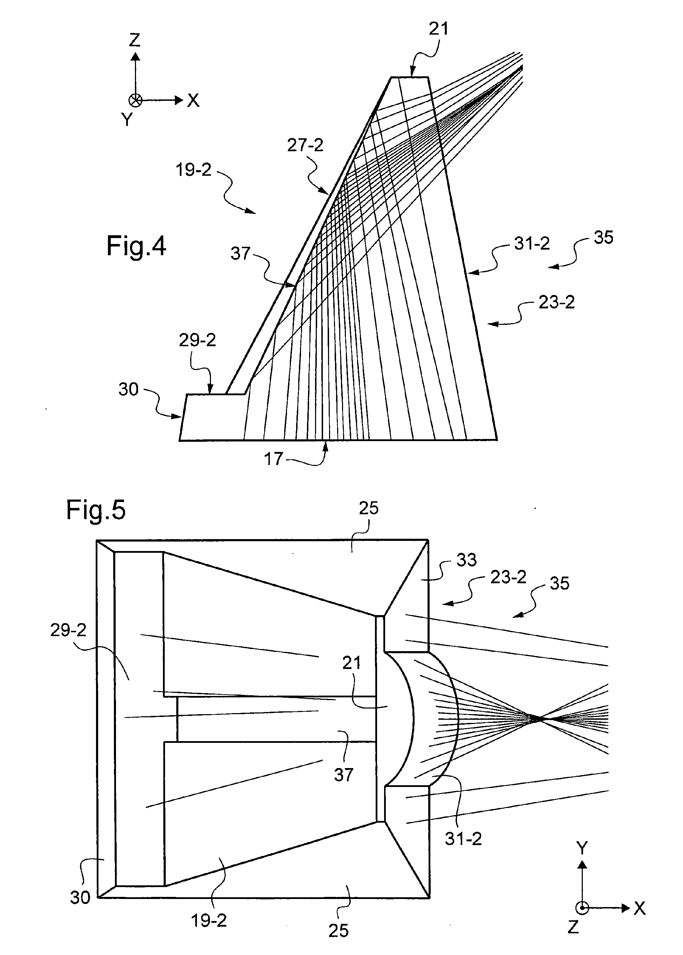

Les figures 4 et 5 montrent un guide de lumière à usage pour la réalisation d'un composant optique pour un dispositif d'éclairage selon un second mode de réalisation, ou second prisme 35.

Le second prisme 35 présente une structure analogue au premier prisme 15. Aux fins de concision, on se contente ici de décrire ses différences avec le premier prisme 15. Les éléments fonctionnels de même structure sont désignés sur les figures 4 et 5 par des numéros de référence identiques à ceux utilisés sur les figures 2 et 3. Les éléments fonctionnellement équivalents présentant une forme différente sont indiqués par leur numéro de référence sur les figures 2 et 3 auquel est adjoint le chiffre "2".

Le second prisme 35 présente une hauteur légèrement inférieure à celle du premier prisme 15. La surface principale 31-2 du second prisme 35 et sa petite face 23-2 présentent une allure analogue à la surface principale 31 et la petite face 23 du premier prisme 15 et des dimensions adaptées à la hauteur du second prisme 35.

Le second prisme 35 se distingue du premier prisme 15 par la structure de la surface secondaire 29-2 de la grande face 19-2 et celle de sa surface principale 27-2. La surface secondaire 29-2, de réfraction, est ici disposée parallèlement au plan XY. L'angle d'incidence des rayons issus du collecteur 1 est ainsi plus important, augmentant ainsi la déviation du faisceau lumineux réfracté par cette surface 29-2.

La surface principale 27-2 présente une plus faible inclinaison par rapport au plan XY dans le plan ZX que la surface de réflexion 27.

En outre, la grande face 19-2 présente une surface tertiaire 37, de réflexion, généralement plane et rectangulaire. La direction d'extension de la surface tertiaire 37 correspond à celle de la surface principale 27-2 dans le plan YX. La surface tertiaire 37 s'étend en longueur suivant la médiane à la surface principale 27-2. Un bord formant largeur de la surface tertiaire 37 se rattache à la surface supérieure 21. Le bord formant largueur de cette surface tertiaire 37 éloigné de cette face supérieure 21 se rattache à la surface secondaire 29-2, en retrait par rapport à la surface principale 27-2. Ici, ce retrait vaut environ 1 millimètre.

La surface tertiaire 37 est plus inclinée que la surface principale 27-2 par rapport au plan XY dans le plan XZ. Elle présente ici une largueur de 2 millimètres.

Les rayons reflétés par la surface tertiaire 37 traversent la surface principale 31 de la petite face 23 avec une inclinaison plus faible par rapport au plan XY.

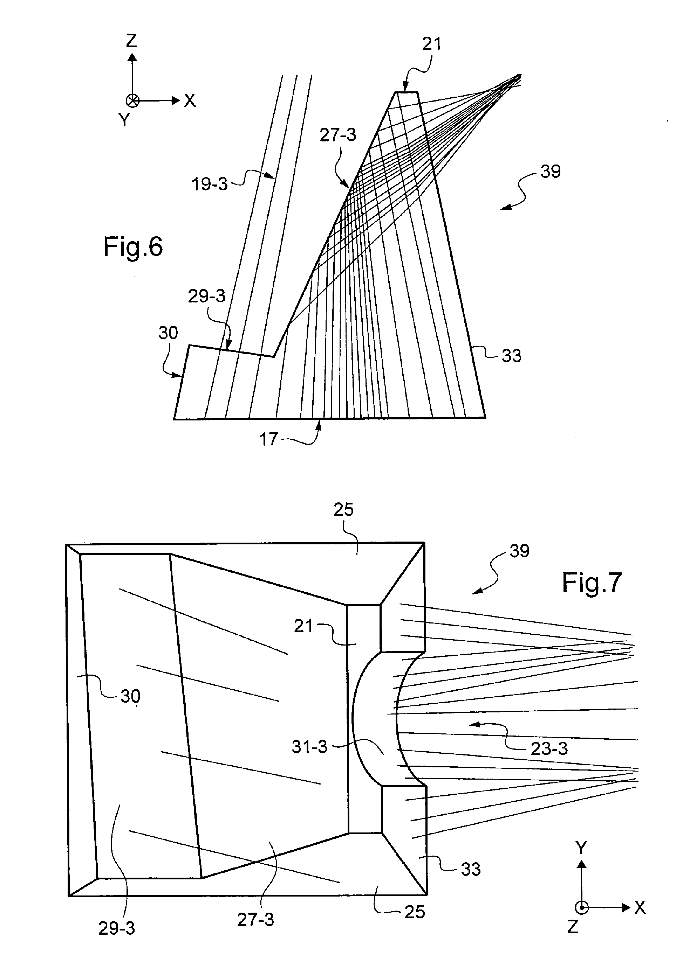

Les figures 6 et 7 montrent un guide de lumière à usage pour la réalisation d'un composant optique pour un dispositif d'éclairage selon un troisième mode de réalisation, ou troisième prisme 39. La même convention de numérotation que dans le cas des figures 4 et 5 est adoptée, le chiffre "3" y remplaçant le chiffre "2".

La surface secondaire 29-3 de la grande face 19-3 se trouve plus inclinée par rapport au plan XY dans le plan XZ que la surface secondaire 29.

Cette surface secondaire 29-3 présente également une plus grande superficie que la surface 29. Elle est disposée de manière que le faisceau lumineux réfracté soit incliné par rapport à Z dans le plan ZX. Elle présente une allure de quadrilatère quelconque.

La surface principale 27-3 de la grande face 19-4 se trouve plus courte et plus inclinée par rapport au plan XY dans le plan ZX que dans le mode de réalisation des figures 2 à 5.

Le faisceau lumineux réfléchi présente ainsi un angle plus faible par rapport à la direction Z.

La surface principale 31-3 de la petite face 23 est concave et a pour fonction d'assurer l'uniformité de l'éclairement. La surface principale 31-3 fait diverger le flux lumineux convergent incident. Elle forme un renforcement de la petite face 23 par rapport à la surface secondaire 33 de cette face.

La zone centrale du faisceau lumineux issu de cette surface principale 31-3 est moins lumineuse. La surface secondaire 33 est identique à celle de la figure 1, en sorte que les rayons lumineux issus de cette surface secondaire 33 se recentrent de part et d'autre du flux central issu de la surface principale 31-3.

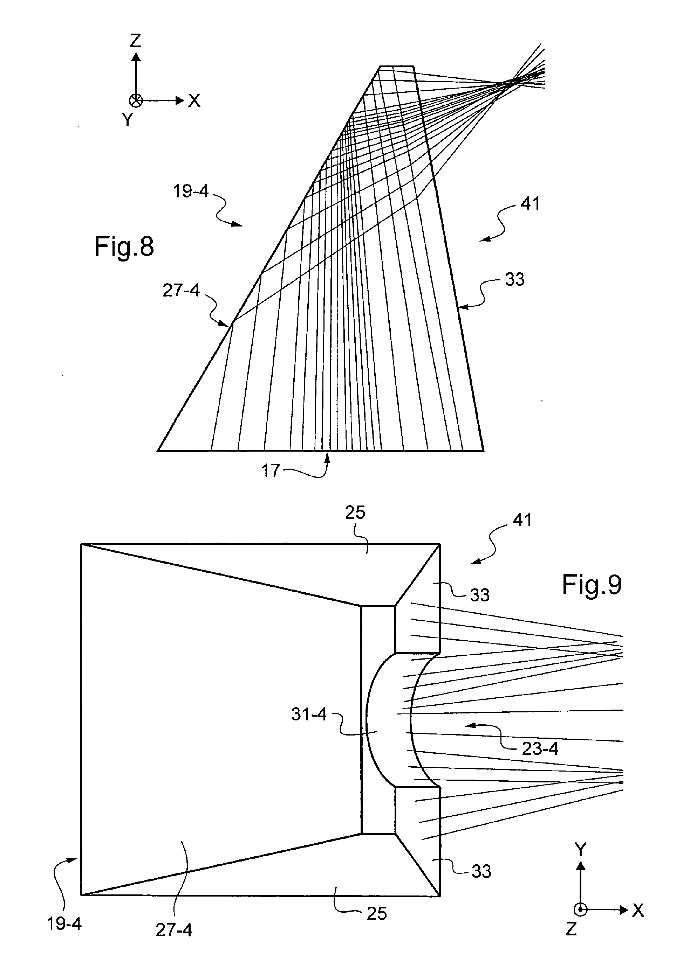

Les figures 8 et 9 montrent un guide de lumière à usage pour la réalisation d'un composant optique pour un dispositif d'éclairage selon un quatrième mode de réalisation, ou quatrième prisme 41. La même convention de numérotation que dans le cas des figures 4 et 5 est adoptée, le chiffre "4" y remplaçant le chiffre "2".

Le quatrième prisme 41 se distingue du premier prisme 15 par le fait que la grande face 19-4 est dépourvue de surface secondaire 29.

La surface principale 27-4 de la grande face 19-4 présente une plus large étendue et se trouve plus inclinée par rapport au plan XY dans le plan ZX. L'intégralité du faisceau lumineux traversant la face d'entrée 17 rencontre la surface principale 27-4.

La surface principale 31-4 de la petite face 23-3 est analogue à la surface principale 31-3, c'est-à-dire qu'elle présente une forme concave.

Par rapport au premier prisme 15, le faisceau lumineux sortant du quatrième prisme 41 se trouve moins incliné par rapport au plan XY.

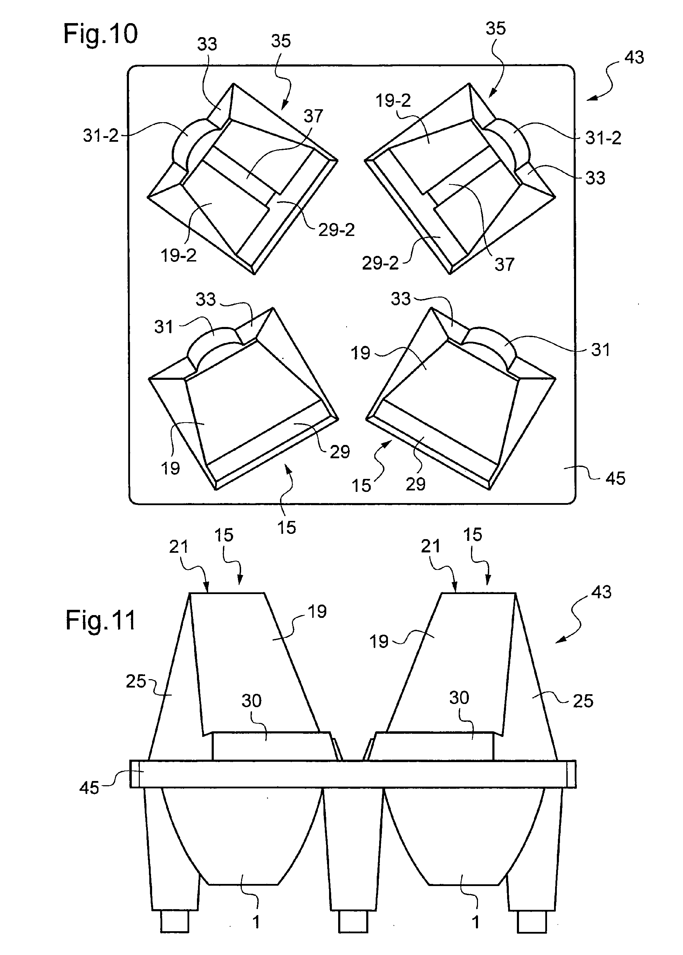

Les figures 10 et 11 montrent un agencement optique à usage pour la réalisation d'un dispositif d'éclairage selon un premier mode de réalisation, ou première optique 43.

La première optique 43 comprend quatre collecteurs du type du collecteur 1, disposés de manière que leur axe de révolution respectif coïncide avec l'un des coins d'un carré.

Deux des collecteurs 1 disposés en des sommets adjacents sont surmontés d'un prisme du type du second prisme 35, tandis que les deux collecteurs 1 restant sont surmontés d'un prisme du type du premier prisme 15.

Les premiers prismes 15 et les seconds prismes 35 sont agencés par paires, en une symétrie miroir selon un plan de symétrie médian du carré en question.

Les surfaces de sortie principales 31 respectives de ces prismes sont orientées vers l'extérieur du carré.

L'angle séparant les plans de symétrie des seconds prismes 35 entre eux, ici d'environ 140°, est plus obtus que l'angle séparant les plans de symétrie des premiers prismes 15 entre eux, ici d'environ 120°.

Entre chaque collecteur 1 et son prisme respectif est intercalée une plaque support 45 commune à tous les collecteurs.

Comme le montre la figure 12, la plaque support 45, les prismes et les collecteurs 1 peuvent être réalisés sous forme d'un ensemble monobloc.

Cette première optique est particulièrement adaptée à l'éclairage d'une chaussée. Elle permet de garantir sur cette chaussée une luminance uniforme et supérieure à 0,75 Cd/m². À chaque fois, un premier prisme 5 et un second prisme 35 sont capables d'éclairer une zone de la chaussée disposée d'un côté du lampadaire sur lequel cette première optique 43 est destinée à être montée.

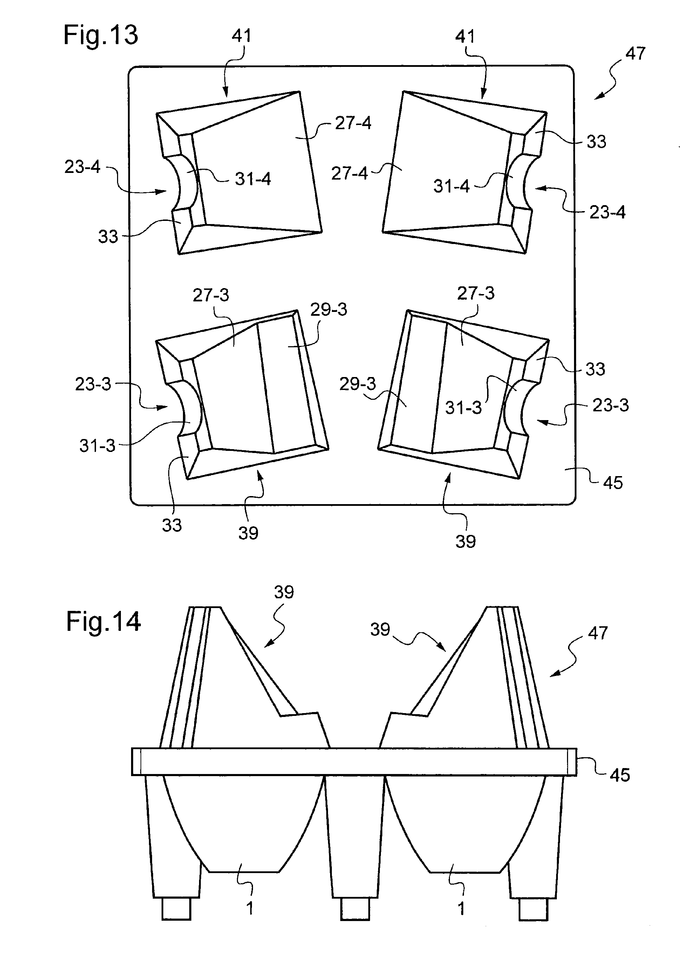

Les figures 13 et 14 montrent un agencement optique à usage pour la réalisation d'un dispositif d'éclairage selon un second mode de réalisation, ou seconde optique 47.

La seconde optique 47 est analogue à la première optique 43 à la différence que les premiers prismes 15 sont remplacés par deux prismes du type des troisièmes prismes 39, tandis que les seconds prismes 35 sont remplacés par deux prismes du type des quatrièmes prismes 41.

La symétrie miroir est conservée. À chaque fois, la petite face 23-3 d'un troisième prisme 34 est parallèle à la petite face 23-4 du quatrième prisme 39 adjacent.

Cette seconde optique 47 est particulièrement adaptée à l'éclairage d'un trottoir bordant la chaussée. Elle permet d'obtenir une uniformité de luminance supérieure à 0,4 avec un niveau moyen d'éclairement supérieur à 7,5 lx.

À chaque fois, un troisième prisme 39 et un quatrième prisme 41 sont capables d'éclairer une zone du trottoir disposée d'un côté du lampadaire sur lequel la seconde optique 47 est destinée à être montée.

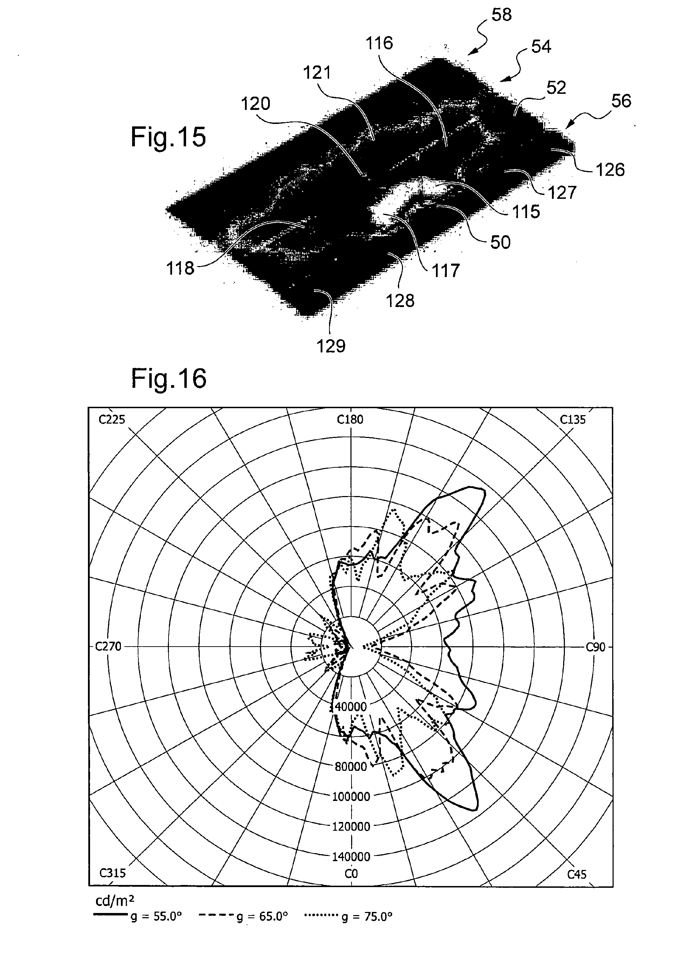

La figure 15 illustre un diagramme représentant la luminosité d'un lampadaire équipé d'un dispositif d'éclairage comprenant 14 optiques du type de la première optique et 2 optiques du type de la seconde optique, l'ensemble de ces optiques étant réparti selon un tableau de 4 colonnes par 4 rangées. Les optiques sont orientées sur le lampadaire de manière identique à leur représentation sur les figures. Ces optiques sont avantageusement montées sur une même platine-support, destinée à être disposée, pour usage, de manière sensiblement horizontale. Toute pièce capable de supporter mécaniquement un ensemble d'optiques, et/ou, le cas échéant, de plusieurs prismes et collecteurs associés pour un maintien fixe en position relative et présentant une allure générale plane peut être considérée comme une platine-support.

La position du lampadaire est désignée 50.

Ce lampadaire 50 est destiné à éclairer une chaussée de deux voies de circulation, à savoir une voie proche 52 du lampadaire 50, et une voie éloignée 54 de ce dernier. La chaussée est bordée de trottoirs, à savoir un trottoir proche 56 du lampadaire et un trottoir éloigné 58 du lampadaire.

Le plan normal à la chaussée, perpendiculaire aux voies 52 et 54, et contenant la position 50 du lampadaire délimite deux zones d'éclairement, une zone amont à gauche du lampadaire sur la figure 15, et une zone aval à droite de ce dernier.

La zone amont du trottoir proche 56 comprend une zone proximale 128 et une zone éloignée 129 du lampadaire.

La zone aval du trottoir proche 56 comprend une zone proche 127 du lampadaire et une zone éloignée 126 de ce lampadaire.

La zone amont de la voie proche 52 comprend une zone 117 proche de l'axe du lampadaire et du trottoir proche 56 et une zone 118 plus éloignée de l'axe du lampadaire et plus proche de la voie éloignée 54. Pour le reste, cette zone amont de la voie proche 52 est couverte principalement par la zone 129.

La zone aval de la voie proche 52 comprend une zone 115 positionnée symétriquement à la zone 117 par rapport à l'axe du lampadaire, et une zone 116 positionnée symétriquement à la zone 118. Pour le reste, cette zone aval de la voie proche 52 est couverte principalement par la zone 126.

La zone aval de la voie éloignée 54 comprend une zone 120 proche de l'axe du lampadaire et une zone 121 proche de la zone 120.

Le faisceau lumineux sortant de la surface principale 31 des premiers prismes de la première optique 43 correspond aux deux zones à fort éclairement et luminance obtenue, ou taches sur la voie proche 52, à savoir les zones 117 et 115. L'autre tache, à savoir les zones 116 et 118, correspondent aux seconds prismes 35, les taches des zones 117 et 115 étant situées sensiblement à l'aplomb du lampadaire.

Les rayons lumineux traversant la surface secondaire 29 constituent à chaque fois une zone de moindre éclairement environnant une tache lumineuse. Cette zone permet de lisser la courbe d'intensité lumineuse notamment face aux luminaires entre les taches lumineuses principales.

La surface secondaire 27 du premier prisme 15 délivre ainsi un flux lumineux de faible intensité qui comble les zones de moindre intensité d'éclairage, en particulier la zone 120.

La zone 121 correspond à l'éclairage des rayons issus de la surface secondaire 29-2 de la grande face 19-2 du second prisme 35.

L'inclinaison de la surface principale 27-2 permet d'orienter le faisceau pour éclairer majoritairement la voie éloignée de la chaussée, à savoir la zone 116.

La lumière issue de la face tertiaire 37 du second prisme 37 permet d'étaler cette zone 116.

Les zones 117 et 118 sont éclairées par le premier prisme 15 et le second prisme 35 à gauche des figures 10 et 11.

La combinaison des surfaces du premier prisme 15 permet d'obtenir sur une partie de la chaussée une luminance conforme au niveau d'uniformité exigée. Cette zone est représentée par la surface 115 de la figure 15.

L'inclinaison des surfaces principales 27 et 33 des grande face 19 et petite face 23 est adaptée pour éclairer une portion particulière de la chaussée. La zone proche du lampadaire est principalement éclairée par le second prisme 35 montré à gauche de la figure 13.

Cette zone proche du lampadaire est particulièrement illuminée par la surface secondaire 29, à l'aplomb de ce lampadaire. L'inclinaison de la surface principale 27 est adaptée pour que les rayons lumineux réfléchis fassent un angle plus faible par rapport à la verticale, pour éclairer une zone proche du lampadaire.

La concavité de la surface de la surface de sortie principale des troisièmes prismes 39 assure l'uniformité de l'éclairement. Elle est adaptée pour diminuer le flux lumineux au centre de la zone éclairée 127.

Avec le troisième prisme 39, les rayons qui sortent de la surface secondaire 33 de la petite face se recentrent de part et d'autre du flux central issu de la surface principale 31-3, en sorte qu'en périphérie de la surface éclairée se situe une zone de flux plus lumineux en raison de la convergence des faisceaux issus de ces surfaces 31 et 33. Cette intensification de la luminance en périphérie compense des effets de projection qui atténuent l'éclairement en périphérie de la tache lumineuse. Il est ainsi obtenu un éclairement uniforme.

Les quatrièmes prismes 41 ont en charge la zone 126 de la figure 15. l'inclinaison de la face principale 29 est adaptée pour que les rayons incidents soient réfléchis avec un angle plus faible par rapport à la normale à cette face. Il en est alors de même des surfaces 31 et 33. Ces surfaces sont adaptées pour que le flux lumineux issu des quatrièmes prismes 41 soit moins incliné par rapport à l'horizontal ce qui permet d'éclairer une zone du trottoir plus éloignée du lampadaire.

La figure 16 représente la courbe de photométrie du dispositif d'éclairage correspondant à la figure 15. Cette courbe démontre que le dispositif permet de répondre aux exigences, en particulier normatives, en matière d'uniformité d'éclairement et de luminance. La courbe de photométrie de la figure 16 présente une allure remarquable en forme de papillon. L'intensité lumineuse est prononcée au voisinage des extrémités angulaires (aux alentours de 40' et 145'). D'une certaine manière, cette courbe représente une signature du dispositif correspondant à la figure 15. Des dispositifs conçus conformément à l'invention peuvent présenter une courbe de photométrie d'allure analogue.

Le positionnement en hauteur et l'espacement des équipements d'éclairage entre eux influe sur l'éclairement obtenue. Les optiques et prismes représentés ont été dimensionnés pour une hauteur de luminaire d'environ 6 mètres et une distance d'éloignement mutuel des lampadaires de 18 mètres. Le dispositif, en particulier ses optiques et prismes, peuvent être modifiés pour s'adapter à des hauteurs et des inter-distances différentes. Tel que décrit, le dispositif convient également pour un éloignement mutuel des lampadaires jusqu'à 21 mètres et une hauteur de 7 mètres.

Deux types d'optiques ont été présentés, l'un destiné à l'éclairage du trottoir, l'autre à l'éclairage de la chaussée. Il est possible de décliner des versions route uniquement, par exemple pour les autoroutes, ou route et trottoir en y insérant le cas échéant quelques modules de type trottoir. Par ailleurs, toute combinaison des prismes décrits plus haut pour former une optique, quel qu'en soit le nombre, est destinée à faire partie de l'invention.

Le dispositif décrit est dédié à une route d'agglomération classique de 7 mètres de large et se compose pour cette application de 14 modules routes et de 2 modules trottoirs.

Les optiques présentées sont pourvues de quatre prismes, mais l'on comprend que ce nombre peut être augmenté sans sortir du, cadre de l'invention.

Les dispositifs d'éclairage présentent plusieurs optiques fixées sur une même platine-support. Une même platine-support, adaptée à une tête de lampadaire, peut recevoir uniquement des premières optiques, une combinaison de premières et secondes optiques, ou uniquement des secondes optiques selon les caractéristiques d'éclairement souhaitées. Autrement dit, il est possible de modifier les caractéristiques d'éclairement d'un lampadaire en ne remplaçant que certaines des optiques fixées sur sa platine-support. Les dispositifs d'éclairage selon l'invention sont ainsi modulables.

L'invention n'est pas limitée aux modes de réalisation décrits ci-dessus, à titre d'exemples uniquement, mais englobe toutes les variantes que pourra envisager l'homme de l'art.

## Revendications

1. Composant optique pour un dispositif d'éclairage du type comprenant une partie formant collecteur de lumière (1) accolée à une partie formant guide de lumière (15, 35, 39, 41),
**caractérisé en ce que**:
- le collecteur (1) présente une forme générale de révolution et comprend une face d'entrée (3), une face de sortie (5) et une surface latérale (7), la face d'entrée (3) et la surface latérale (7) étant conjointement agencées pour délivrer en face de sortie (5) un flux lumineux convergent dont la section circulaire présente une zone centrale de forte intensité par rapport à une zone périphérique de faible intensité,
- le guide de lumière (15, 35, 39, 41) présente une forme généralement pyramidale dont une face de base (17) est accolée à la face de sortie (5) du collecteur (1) et dont la hauteur issue de cette face de base (17) se trouve inclinée par rapport à un axe central dudit collecteur, ce qui définit une grande face latérale (19, 19-2, 19-3, 19-4) et une petite face latérale (23, 23-2, 23-3, 23-4),
- ladite petite face latérale (23, 23-2, 23-3, 23-4) est agencée en une face de sortie qui comprend une surface de réfraction parabolique (31, 31-2, 31-3, 31-4),
- ladite grande face latérale (19, 19-2, 19-3, 19-4) comprend principalement une surface de réflexion (27, 27-2, 27-3, 27-4) disposée par rapport à la face de base (17) et à la face de sortie de manière à orienter sensiblement l'ensemble de la zone centrale du faisceau lumineux issu du collecteur (1) vers la surface de réfraction parabolique (31, 31-2, 31-3, 31-4).

2. Composant selon la revendication 1, dans lequel la petite face latérale (23, 23-2, 23-3, 23-4) comprend en outre une surface de réfraction plane (33) de part et d'autre de la surface de réfraction parabolique (31, 31-2, 31-3, 31-4), et dans lequel la surface de réflexion (27, 27-2, 27-3, 27-4) est disposée par rapport à la face de base (17) et à la face de sortie (23, 23-2, 23-3, 23-4) de manière à orienter une portion seulement de la zone périphérique du faisceau lumineux issu du collecteur (1) vers les surfaces de réfraction planes (33).

3. Composant selon l'une des revendications précédentes, dans lequel ladite grande face latérale (19-2) comprend en outre une surface de réflexion secondaire (37), disposée en position médiane et en renfoncement par rapport à la surface de réflexion principale (27-2) et inclinée par rapport à cette dernière, la surface de réflexion principale (27-2) et la surface de réflexion secondaire (37) étant toutes deux agencées de manière à orienter sensiblement l'ensemble de la zone centrale du faisceau lumineux issu du collecteur (1) vers la surface de réfraction parabolique (31).

4. Composant selon l'une des revendications précédentes, dans lequel la grande face latérale (19, 19-2, 19-3) comprend une surface de réfraction (29, 29-2, 29-3) inclinée par rapport à la surface de réflexion principale (27, 27-2, 27-3) et agencée pour orienter une partie seulement de la zone périphérique du faisceau lumineux issue du collecteur (1).

5. Composant selon la revendication 4, dans lequel la face de sortie (5) du collecteur (1) est agencée en une surface plane, et la surface de réfraction (29, 29-2, 29-3) est parallèle à cette face de sortie (5) du collecteur (1).

6. Composant selon l'une des revendications 4 et 5, dans lequel la surface de réfraction (29-2) de la grande face latérale (19, 19-2, 19-3) présente une allure généralement trapézoïdale, en particulier rectangulaire.

7. Agencement optique pour un dispositif d'éclairage comprenant un jeu de composants (15, 35, 39, 41) selon l'une des revendications 1 à 8 fixés sur une platine-support (45).

8. Agencement selon la revendication 7, dans lequel le jeu de composants comprend une ou plusieurs paires de composants identiques l'un à l'autre, dans chaque paire, les composants étant disposés en symétrie miroir l'un par rapport à l'autre selon un plan de symétrie perpendiculaire à la platine-support (45), et fixés en cette position relative.

9. Agencement selon la revendication 8, dans lequel le plan de symétrie est commun à au moins deux paires de composants.

10. Agencement selon l'une des revendications 8 et 9, dans lequel chaque paire présente un composant (39, 41) dont la face de sortie (23-3, 23-4) est orientée selon une direction parallèle à la direction d'orientation de la face de sortie d'un composant d'une autre paire.

11. Agencement selon l'une des revendications 7 à 10, dans lequel chaque composant du jeu de composants présente une surface de réfraction parabolique concave, ou convexe.

12. Agencement selon l'une des revendications 7 à 11 comprenant au moins deux composants optiques (15, 35, 39), dont la grande face latérale (19, 19-2, 19-3) comprend une surface de réfraction (29, 29-2, 29-3) inclinée par rapport à la surface de réflexion principale (27) et agencée pour orienter une partie seulement de la zone périphérique du faisceau lumineux issu de leur collecteur (1) respectif.

13. Agencement selon la revendication 12, dans lequel l'ensemble du jeu de composants comprend une surface de réfraction (29, 29-2, 29-3) inclinée par rapport à la surface de réflexion principale (27) et agencée pour orienter une partie seulement de la zone périphérique du faisceau lumineux issu de leur collecteur (1) respectif.

14. Agencement selon l'une des revendications 7 à 13, dans lequel le jeu de composants comprend au moins deux composants optiques orientés de telle manière que les faces de sorties de ces composants soient orientées selon des directions distinctes l'une de l'autre.

15. Dispositif d'éclairage publique comprenant un jeu d'agencements selon l'une des revendications 7 à 14, et au moins une source de lumière ponctuelle respective pour chaque composant optique desdits agencements.
